# EUROPEAN PATENT APPLICATION

(11) **EP 1 496 662 A1**
(43) Date of publication of application: **12.01.2005**
(21) Application number: 03291679.3
(22) Date of filing: 07.07.2003
(51) Int. Cl.: H04L 29/06, H04L 12/56

(54) **Forwarding method**

(71) Applicant: ALCATEL, 75008 Paris (FR)
(72) Inventor: Van den Bosch, Sven Jozef Jeanne, 9080 Lochristi (BE)
(74) Representative: Narmon, Gisèle Marie Thérèse

(57) **Abstract**

A method to forward in a telecommunication domain of a telecommunication network a control plane information packet of a stream of information packets being received by an edge node of the telecommunication domain is claimed. The information packets comprises a protocol identifier field. The method further comprises the steps of by the edge node retrieving a value of the protocol identifier field of one of the received information packets and; by the edge node, in the event when the value matches a first predefined value that identifies the information packet as being a control plane information packet of a predefined protocol, forwarding the information packet to a path-decoupled decision node in the telecommunication domain for being processed.

## Description

The present invention relates to a method to forward in a telecommunication domain of a telecommunication network a control plane information packet of a stream of packets according to the preamble of claim 1; and to an edge node and a path-decoupled decision node, according to respectively the preamble of claim 5 and claim 7, which realize such a method; and to a telecommunication domain, according to the preamble of claim 8 that comprises such an edge node or such a path-decoupled decision node.

Such a method, edge node, path-decoupled decision node and telecommunication domain are already known in the art.

*In the article with the title 'Towards an integrated solution for multimedia over IP' of the Alcatel Telecommunications Review - 2nd Quarter 2001, it is described in the paragraph 5. Application based call signaling is the glue for network inter-working - subparagraph - Strict admission* - that a third strategy of supporting real-time (interactive) multimedia services is based on strict resource provisioning and admission control per real time multimedia flow. This third strategy, called strict admission, requires inter-working between call signaling and resource provisioning in order to execute the per-flow admission control.

Two strategies can be chosen to implement strict admission i.e. bandwidth brokerage and in-band signaling.

A first strategy, in-path signaling is based on using an in-band signaling protocol for resource reservation. Examples are Packet Data Protocol Context Activation, shortly PDP-CA in Universal Mobile Telecommunication Networks UMTS, the Resource Reservation Protocol RSVP in Internet Protocol IP Intserv networks, or the Next Steps In Signaling NSIS protocol. These protocols reserve resources in network elements along the data path. Each network element executes the resource admission control per flow. These protocols are also called path-coupled protocols since the data packets of the stream of information packets and the control packets of the stream of information packets of such an implemented protocol are following the same path. The control packets of a stream of information packets, which are in charge of the signaling messages of the implemented protocol, are herein also called control plane information packets. On-path signaling, or path-coupled signaling, poses deployment issues because many data path elements need to be upgraded simultaneously for end-to-end reservations. Also, it requires the necessary decision logic to be present in many data plane entities.

A second, bandwidth brokerage, as it is described in the article, is more applied to IP core networks. In these scenario's, the Internet Service Provider ISP sells connectivity services to an Application Service Provider ASP through Service Level Agreements SLA's, each of which describes a mesh of pipes with a guaranteed throughput, packet loss and delay bound for each established pipe. The Internet Service Provider mainly controls the transport plane while the Application Service Provider is responsible for the functionality of the application plane. The Internet Service Provider is logically equipped with a central entity called the bandwidth broker, which has an overall view of all the available network resources and topology. Protocols that apply this approach are also called off-path signaling protocols or path-decoupled protocols since the data packets of the stream of information packets and the control packets of the stream of information packets of the implemented protocol are not necessarily following the same path.

A network element in a telecommunication domain that comprises the centralized data-plane functionality for the overall traffic over that telecommunication domain is called herein a path-decoupled decision node.

A node of a telecommunication domain, located at the edge of the domain to receive incoming traffic in the telecommunication domain, is called provider edge node or herein also called edge node.

It has to be remarked that each Internet protocol packet comprises a protocol identifier field. The inserted value in this protocol identifier field of a control plane information packet identifies uniquely the protocol that is applied upon the stream of information packets.

Indeed, in the event when a signaling protocol is standardized it will receive a protocol identifier of a standardization organization. This protocol identifier is inserted in the control plane information packets at a predefined place. This means that e.g. a first predefined value that identifies a predefined protocol will be inserted at a predefined field in the control plane information packets.

A problem to a telecommunication domain that applies a path-coupled protocol is that all the nodes of its domain, or at least all the edge nodes, must be enabled to execute admission control and that all these nodes needs to be upgraded in the event of eventual upgrade of the admission control functionality in the network. Indeed, an update of only one decision node would be more efficient. However straightforward inclusion of an above explained path-decoupled decision node in such a telecommunication domain would not solve the problem since the control plane information packets are following the data-path, from one hop to a next hop - along with the data packets, according to the path-coupled installed protocol. Due to the absence of a path-decoupled protocol the path-decoupled decision node would never receive any control plane information packet.

An object of the present invention is to provide a method to forward in a telecommunication domain of a telecommunication network a control plane information packet of a stream of information packets being received by an edge node of the telecommunication domain and to provide such an edge node and a path-decoupled decision node in such a telecommunication domain that irrespective of the installed kind of protocol, path-coupled protocol or path-decoupled protocol, would in the event of an upgrade of the admission control functionality, not require an upgrade of all nodes, either edge nodes or core nodes, in the telecommunication domain.

This object is achieved with the method to forward in a telecommunication domain a control plane information packet of claim 1, and with the edge node and the path-decoupled decision node of claim 5 and claim 7, respectively, and with the telecommunication domain that comprises such an edge node or such a path-decoupled decision node of claim 8.

Indeed, by comprising in the method to forward in a telecommunication domain a control plane information packet the steps of:
- retrieving by means of a retriever a value of the protocol identifier field of one of the received information packets of a stream of information packets being received by an edge node of the telecommunication domain; and
- executing a first forwarding step with a first forwarder, in the event when the value is a first predefined value that identifies the information packet as being a control plane information packet of a predefined protocol, of first forwarding the information packet to a path-decoupled decision node included in the telecommunication domain for being processed, every control plane information packet that belongs to a stream of information packets that is forwarded in the telecommunication network via this telecommunication domain according to a predefined protocol, is deviated to the path-decoupled decision node.

It has to be remarked that, even when a stream of information packets, being received by the edge router, and travelling according to a path-coupled protocol, due to the pre-filtering i.e. first retrieving the protocol identifier and checking if this protocol identifier matches a predefined protocol identifier, and upon a positive matching, forwarding the control-plane information packet to the path-decoupled decision node, the forwarding mechanism that is usual used to forward the control plane information packet to the next hop on the data-path will not be executed anymore. This usual forwarding mechanism is in fact by-passed.

In this way, even when a path-coupled architecture is installed in the telecommunication domain, once a control plane information packet that belongs according to its protocol identifier to a stream of information packets that travels according to a predefined protocol, the control plane information packet will be deviated to the path-decoupled decision node. In the event when an upgrade of the admission control functionality of this predefined protocol is to be executed, only the path-decoupled decision node needs to be upgraded.

Furthermore, it has to be clear that the present invention is not limited to the matching of only one predefined value that identifies a predefined protocol. Indeed, the matching might as well be executed against a plurality of protocol identifiers. As it is explained above, different kinds of protocols do exist, either path-coupled or path-decoupled. In the event when a network operator of a telecommunication domain decides to deviate all the control plane information packets that belong to different protocols, either path-coupled or path-decoupled prtocols, the matching has to be executed against a total list of potential protocol identifiers that identifies each potential protocol that could guide internet packets over its telecommunication domain. In this way, all control data plane information packets are deviated to the path-decoupled decision node.

Another remark is that it has to be clear that only control plane information packets might be deviated to the path-decoupled decision node. This means that for data packets at the predefined place i.e. at the protocol identifier field of the information packet, no value that matches one or another predefined value that identifies a one or another predefined protocol, is found. The information packet is not recognized as a control plane data packet. In this way, the data packets are travelling through the telecommunication domain according to a predefined data-path, from one hop to a next-hop until it leaves again the telecommunication domain via an edge router.

A convenient implementation of the present invention is described in the method of claim 2 and the edge node of claim 6. Herein it is described that by further comprising in the method the steps of :
- defining over the telecommunication domain a Virtual Private Network with a hub-and-spoke topology, with the path-decoupled decision node as the hub of the hub-and-spoke topology and with at least the edge node that receives the stream of information packets as a spoke of the hub-and-spoke topology; and
- comprising in the first forwarding step which is executed by the first forwarder a first substep of returning by a first Virtual Private Network forwarding table of the edge node upon reception of the first predefined value, a reference of the path-decoupled decision node. In this way the first forwarder is enabled to forward the control plane information packet to the path-decoupled decision node as expected. So, by using an existing technology i.e. the definition of a Virtual Private Network and the association with Virtual Private network forwarding tables the present invention can be implemented in existing networks in a simple way. The operator needs only to ensure the association of the predefined value that identifies the protocol for which a deviation of its control plane information packets is desired, to a Virtual Private network forwarding table. In the event of a match of the value of the protocol identifier field in a packet with the predefined protocol identifier, this specific forwarding table will always return a reference of the path-decoupled decision node as next-hop for the actual to be forwarded information packet i.e. a control plane information packet.

Furthermore, once the control plane information packet is deviated towards the path-decoupled decision node, the method of the invention further comprises, upon reception by the path-decoupled decision node of one or more information packets which are identified as a control plane information packet of the predefined protocol, processing these information packets by a processor of the path-decoupled decision node and providing thereby at least one processed control plane information packet; and second forwarding step to be executed by a second forwarder to forward the at least one processed control plane information packet to an outgoing edge node of the stream of information packets. This is described in claim 3 and claim 6. Indeed, in known path-decoupled protocols the processed control plane information packets are usually forwarded to a next path-decoupled decision node. Therefore, the actual path-decoupled decision node determines the outgoing edge node of the stream of information packets i.e. the edge node via which at least the data information packets are leaving the telecommunication domain. Furthermore, based on the knowledge of the outgoing edge node a next telecommunication domain is determined and hereby also a next path-decoupled decision node. Now, according to the present invention, the actual path-decoupled decision node will not forward the control plane information packets towards this determined next path-decoupled decision node but will use the intermediate defined information i.e. a reference of the outgoing edge node and the path-decoupled decision node forwards the processed control plane information packets only to this outgoing edge node. In this way, the processed control plane information packets are following again the data-path of the data information packets. This enables the implementation of a topology for a next telecommunication domain to be independent of the use of path-coupled protocols or path-decoupled decision protocols. This is an advantage of the present invention over the fixed use of either path-coupled protocols or path-decoupled protocols over different telecommunication domains.

In the event of defining again a Virtual Private network as above with a hub-and-spoke topology, a simple implementation of forwarding the processed packets to the outgoing edge node is realized. This is described in claim 4 and claim 7. Indeed, by comprising in the second forwarding step a second substep of returning by a second Virtual Private Network forwarding table of the path-decoupled decision node and based upon destination information of the stream of information packets, a reference of the outgoing edge node, the forwarding to the outgoing edge node is again enabled according to a simple way.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

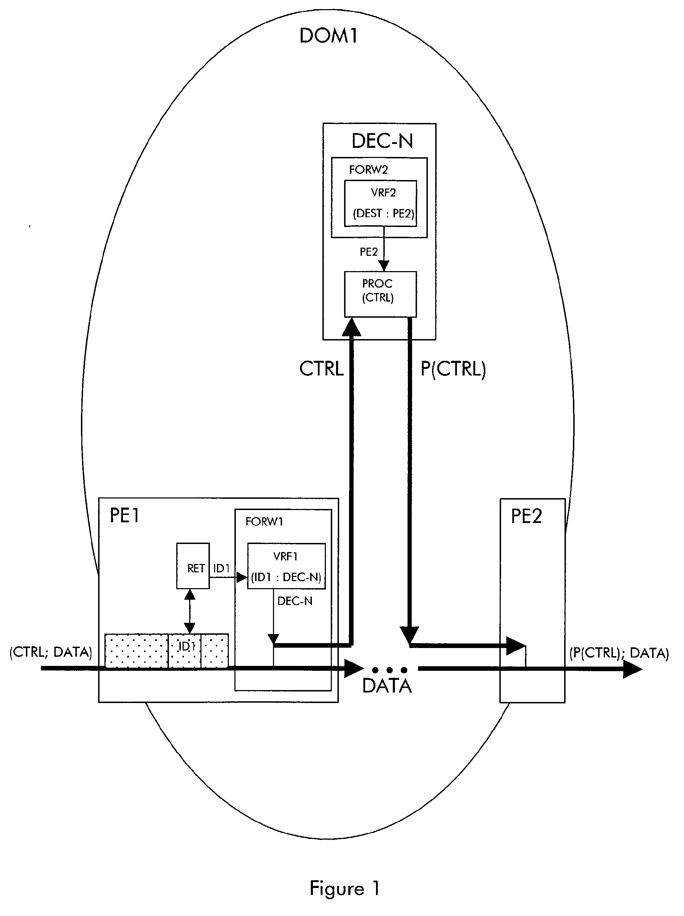

The above and other objects and features of the invention will become more apparent and the invention itself will be best understood by referring to the following description of an embodiment taken in conjunction with the accompanying drawings wherein Figure 1 that represents a telecommunication domain in a telecommunication network.

The working of the different nodes in the telecommunication domain according to the present invention in accordance with its telecommunication environment that is shown in Figure 1 will be explained by means of a functional description of the different blocks shown therein. Based on this description, the practical implementation of the blocks will be obvious to a person skilled in the art and will therefore not be described in details.

Referring to Figure 1 a telecommunication domain is shown DOM1. The telecommunication domain DOM1 is part of a telecommunication network. The telecommunication domain DOM1 comprises edge nodes such as PE1 and PE2 (shown) at the edge of the telecommunication domain DOM1 and core nodes such as CN1 and CN2 (not shown) and a path-decoupled decision node DEC-N which might be located at the edge or in the core of the telecommunication domain.

It has to be remarked that the telecommunication domain DOM1 comprises still other nodes, which are in order not to overload the Figure 1, not shown, and in order not to overload this present description, not mentioned.

The edge nodes such as PE1 and PE2 are enabled to receive and to transmit respectively, incoming streams of information packets and outgoing streams of information packets, for the telecommunication domain DOM1.

Consider the definition of a Virtual Private Network over the different nodes of the telecommunication domain DOM1. Furthermore, a hub-and-spoke topology is defined in this Virtual Private Network. The path-decoupled decision node DEC-N is considered as the hub of the hub-and-spoke technology and the edge nodes PE1 and PE2 are each defined to be a spoke of this hub-and-spoke topology. It has to be explained that due to this known virtual topology definition in this Virtual Private Network over this telecommunication domain DOM1, incoming traffic in the telecommunication domain DOM1 via one of its edge nodes being defined as a spoke e.g. EP1 is forwarded based upon Virtual Private Network Forwarding tables.

A stream of information packets (CTRL;DATA) that comprises as well control plane information packets CTRL as data packets DATA is considered to enter the telecommunication domain DOM1 via edge router PE1.

The edge router PE1 comprises a retriever RET and a first forwarder FORW1. The retriever RET is coupled to an input of the edge router PE1 and to the first forwarder FORW1. The first forwarder FORW1 is coupled to an output of the edge router PE1. An incoming packet of the stream of information packets is shown in the Figure 1. As it was mentioned above, each packet of the stream of information packets (CTRL;DATA) comprises a protocol identifier field ID. The protocol identifier field of the incoming packet is shown in Figure 1. This protocol identifier is defined at a predefined place in the information packets. In the event when the information packet is a control plane information packet, the protocol identifier field comprises a predefined value. This predefined value identifies uniquely the signaling protocol to which this control plane information packet belongs.

The retriever RET1 of the first edge node PE1 is included to retrieve a value e.g. ID1 from the protocol identifier field ID of the information packet. It has to be remarked here that the retriever RET knows exactly where to look in the information packet i.e. the retriever RET knows where this protocol identifier field is located in the information packet.

The value in the protocol identifier field is provided to the first forwarder FORW1. Based upon this value, the first forwarder FORW selects a predefined forwarding procedure:
- in the event when the value of the protocol identifier matches a first predefined value ID1, the packet is recognized as being a control plane information packet and must be deviated towards the path-decoupled decision node of the telecommunication domain DOM1 for being processed. This will be explained more in detail in a further paragraph; and
- in the event when the value of the protocol identifier doesn't match a first predefined value ID1, the packet is not recognized as being a control plane information packet and must not be deviated towards the path-decoupled decision node of the telecommunication domain DOM1 for being processed. The packet should follow its normal route through the telecommunication domain DOM1.

Both procedures will be explained more in detail in a further paragraph.

The path-decoupled decision node DEC-N comprises the functionality to execute for the telecommunication domain DOM1 admission control. This resource management consists in strict resource provisioning and admission control per real-time multimedia flow and requires inter-working between call signaling and resource provisioning in order to execute the per flow admission control. However in order to be able to execute this included functionality the path-decoupled decision must receive this call signaling i.e. the control plane information packets.

The two different kinds of forwarding procedures, applied by the first forwarder FORW1, will now be described in more detail.

In the event when the protocol identifier ID matches with a first predefined value i.e. ID1 the first forwarder FORW1 recognizes in fact the received packet as a control plane information packet. The first predefined value ID1 is used to find a particular Virtual Private Network forwarding table. The Virtual Private Network forwarding table VRF1 that is configured as being associated to this first predefined value ID1 is called herein VRF1. Furthermore, the destination address of the actual received information packet is used to execute a look-up in this first Virtual Private Network forwarding table VRF1. Due to the defined hub-and-spoke topology over the defined Virtual Private Network this Virtual Private Network forwarding table is configures as returning a reference towards the path-decoupled decision node DEC-N. This reference is an identification of an output interface of the edge node EP1 towards the path-decoupled decision node DEC-N i.e. a logical interface towards DEC-N. In this way, in the event when the received information packet is a control plane information packet, the information packet is deviated to the path-decision node DEC-N where it should be.

In the event when the protocol identifier ID does not match with a first predefined value i.e. ID1 the first forwarder FORW1 does not recognize the received packet as a control plane information packet that belongs to the predefined protocol. Such a packet should not be deviated towards the path-decoupled decision node and is allowed to follow the usual data-path in the telecommunication domain. For these packets no advantage has to be taken of the defined virtual hub-and-spoke topology over the Virtual Private Network. The usual installed selection and forwarding mechanisms can be used. In order not to overload the present description of a possible embodiment, besides the first Virtual Private Network forwarding table VRF1, a default routing table is installed in the edge router PE1.

It has to be remarked here that the present invention is not limited to the use of only one default routing table for the execution of the usual selection and forwarding mechanism of this edge router EP1. Indeed, small modification may be applied to this present description in order to adapt it to the application of other kinds of forwarding mechanisms that forward the information packets, not being recognized a control plane information packet, through the telecommunication domain DOM1. Such a forwarding mechanism is for example implemented with a plurality of virtual Private Network forwarding tables (different of the first Virtual Private Network forwarding table VRF1) whereof one VRF is selected based upon e.g. the incoming interface of the edge router EP1 for the information packet and for which a look-up is executed in the selected VRF based upon the destination address of the information packet in order to return a reference to the next-hop interface.

Applying the above mentioned default routing table, the destination address of the information packet is used to look-up in the routing table the reference to the interface of towards the next hop in the telecommunication domain. It has to be remarked that although only two nodes are shown in Figure 1, still other nodes are present in the telecommunication domain DOM1. The next hop for a information packet (not being recognized as a control plane packet of the predefined protocol) is not necessarily the second edge node EP2. This is shown in Figure 1 with the dotted line between EP1 and EP2.

The path-decoupled decision node DEC-N comprises a processor PROC and a second forwarder FORW2. The processor PROC is coupled to one of the input interfaces of the path-decoupled decision node and the second forwarder FORW2 is coupled to the processor PROC.

The processor PROC is included to process one or more information packets being identified as a control plane information packet CTRL of the predefined protocol based upon its value of a protocol identifier ID1 in the protocol identifier field ID. The processor PROC provides thereby at least one processed control plane information packet called P(CTRL).

The second forwarder FORW2 forwards the at least one processed control plane information packet P(CTRL) to an outgoing edge node PE2 of the stream of information packets.

Furthermore, due to the defined hub-and-spoke topology for the defined Virtual Private Network in the telecommunication domain DOM, the second forwarder FORW2 further comprises a second Virtual Private Network forwarding table VRF2. This forwarding table VFR2 returns, based upon destination information DEST of the stream of information packets i.e. in fact the destination information of the control plane information packets, a reference of the outgoing edge node PE2 i.e. an identification of an outgoing interface of the path-decoupled decision node DEC-N towards this edge node EP2. Hereby, the forwarder forwards the processed control plane information packets P(CTRL) to the outgoing edge node PE2. Via this second edge node EP2, the processed control plane information packets P(CTRL) leave again the telecommunication domain DOM1 as well as the data information packets of the stream of information packets do.

It has to be remarked that also the edge router PE2 comprises the functional blacks described as described for the edge router PE1. However, this is not shown in Figure 1 in order not to overload it.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method to forward in a telecommunication domain (DOM1) of a telecommunication network a control plane information packet (CTRL) of a stream of information packets (CTRL; DATA) being received by an edge node (PE1) of said telecommunication domain (DOM1), said information packets comprising a protocol identifier field (ID), **characterized in that** said method further comprises
by said edge node (PE1) retrieving a value (ID1) of said protocol identifier field (ID) of one of said information packets (CTRL1) and
by said edge node (PE1), in the event when said value (ID1) being a first predefined value (ID1) that identifies said one information packet (CTRL1) as being a control plane information packet (CTRL) of a predefined protocol, first forwarding said one information packet to a path-decoupled decision node (DEC-N) in said telecommunication domain for being processed.

2. The method to forward a control plane information packet (CTRL) according to claim 1, **characterized in that** said method further comprises
- defining over said telecommunication domain (DOM) a Virtual Private Network with a hub-and-spoke topology and with said path-decoupled decision node (DEC-N) as the hub of said hub-and-spoke topology and at least said edge node (PE1) as a spoke of said hub-and-spoke topology; and
- comprising in said first forwarding step a first substep of returning by a first Virtual Private Network forwarding table (VRF1) of said edge node (PE1) upon receiving of said first predefined value (ID1) a reference of said path-decoupled decision node (DEC-N).

3. The method to forward a control plane information packet (CTRL) according to claim 1, **characterized in that** said method further comprises upon reception by said path-decoupled decision node (DEC-N) of one or more information packets being identified as a control plane information packet (CTRL) of said predefined protocol, processing said one or more information packets and providing thereby at least one processed control plane information packet (P(CTRL)); and second forwarding by said path-decoupled decision node (DEC-N) said at least one processed control plane information packet (P(CTRL)) to an outgoing edge node (PE2) for said stream of information packets.

4. The method to forward a control plane information packet (CTRL) according to claim 2 and claim 3, **characterized in that** said method further comprises
- comprising in said second forwarding step a second substep of returning by a second Virtual Private Network forwarding table (VRF2) of said path-decoupled decision node (DEC-N) and based upon destination information (DEST) of said stream of information packets a reference of said outgoing edge node (PE2) in order to enable said forwarding to said outgoing edge node (PE2).

5. An edge node (PE1) of a telecommunication domain (DOM1) in a telecommunication network to forward a control plane information packet (CTRL) of a stream of information packets (CTRL; DATA) being received by said edge node (PE1), said information packets comprising a protocol identifier field (ID),
**characterized in that** said edge node (PE1) comprises
a retriever (RET) coupled to an input of said edge node (PE1) to retrieve a value (ID1) of said protocol identifier field (ID) of one of said received information packets (CTRL1) and to provide said value (ID1) to a first forwarder (FORW1), and
said first forwarder (FORW1) coupled to said retriever (RET) to forward said one information packet, in the event when said value (ID1) being a first predefined value (ID1) that identifies said one information packet (CTRL1) as being a control plane information packet (CTRL) of a predefined protocol, to a path-decoupled decision node (DEC-N) in said telecommunication domain for being processed.

6. Said edge node (PE1) of claim 5 to forward a control plane information packet (CTRL) **characterized in that**
said edge node (PE1) is defined as a spoke of a hub-and-spoke topology in a Virtual Private Network being defined in said telecommunication domain (DOM), and that said first forwarder (FORW1) comprises a first Virtual Private Network forwarding table (VRF) to return upon reception of said first predefined value (ID1) a reference of said path-decoupled decision node (DEC-N), said path-decoupled decision node (DEC-N) being defined as the hub of said hub-and-spoke topology of said Virtual Private Network.

7. A path-decoupled decision node (DEC-N) in a telecommunication domain (DOM1) of a telecommunication network for forwarding a control plane information packet (CTRL) of a stream of information packets (CTRL; DATA) received by an edge node (PE1) of said telecommunication domain (DOM1), said information packets comprising a protocol identifier field (ID), **characterized in that** said path-decoupled decision node (DEC-N) comprises
a processor (PROC)
to process an information packet upon reception of said information packet of said stream of information packets, said information packet being identified as a control plane information packet (CTRL) of said predefined protocol based upon a value of a protocol identifier (ID1) in said protocol identifier field (ID) being a first predefined value (ID1) that identifies an information packet (CTRL1) as being a control plane information packet (CTRL) of a predefined protocol; and
to provide thereby at least one processed control plane information packet (P(CTRL)); and
a second forwarder (FORW2) to forward said at least one processed control plane information packet (P(CTRL)) to an outgoing edge node (PE2) of said stream of information packets,
furthermore, said path-decoupled decision node (DEC-N) being defined as the hub of a hub-and-spoke topology of a Virtual Private Network being defined in said telecommunication domain (DOM), and
said second forwarder (FORW2) further comprises hereby a second Virtual Private Network forwarding table (VRF2) to return based upon destination information (DEST) of said stream of information packets a reference of said outgoing edge node (PE2) in order to enable said forwarder to forward said processed control plane information packet to said outgoing edge node (PE2).

8. A telecommunication domain (DOM1) of a telecommunication network, **characterized in that** said telecommunication domain (DOM1) comprises at least anyone of an edge node according to claim 5, an edge node according to claim 6, a path-decoupled decision node (DEC-N) according to claim 7.
